# EUROPÄISCHE PATENTSCHRIFT

(11) **EP 1 254 492 B1**
(45) Veröffentlichungstag und Bekanntmachung des Hinweises auf die Patenterteilung: **01.10.2003**
(21) Anmeldenummer: 01907498.8
(22) Anmeldetag: 06.02.2001
(51) Int. Cl.: H01R 9/24, B60R 16/02

(54) **LENKSÄULENMODUL**
STEERING COLUMN MODULE
MODULE COLONNE DE DIRECTION

(30) Priorität: 08.02.2000 DE 10005492
(43) Veröffentlichungstag der Anmeldung: 06.11.2002
(73) Patentinhaber: Leopold Kostal GmbH & Co. KG, 58507 Lüdenscheid (DE)
(72) Erfinder: KETZER, Thomas, 58509 Lüdenscheid (DE); HEITE, Volker, 57462 Olpe (DE); WESSENDORF, Benno, 58515 Lüdenscheid (DE)
(86) Internationale Anmeldenummer: EP0101242
(87) Internationale Veröffentlichungsnummer: WO01059882

(56) Entgegenhaltungen:
- FR-A- 2 750 219
- US-A- 5 431 573
- US-A- 5 747 763
- US-A- 5 944 534

## Beschreibung

Die Erfindung betrifft ein Lenksäulenmodul. Insbesondere betrifft die Erfindung ein Lenksäulenmodul für ein Kraftfahrzeug enthaltend zumindest zwei in axialer Richtung der Lenksäule benachbart zueinander angeordnete Funktionsmodule sowie ein Elektronikmodul zum Kontaktieren der in den unterschiedlichen Ebenen angeordneten Funktionsmodule mittels Steckverbindern sowie zum Anschließen derselben an das Bordnetz, wobei das jeweils eine Steckverbinderteil eines Steckverbinders einem Funktionsmodul und das damit zusammenwirkende dem Elektronikmodul zugeordnet sind.

Lenksäulenmodule bei Kraftfahrzeugen bestehen in der Regel aus mehreren einzelnen Funktionsmodulen, wie beispielsweise Lenkstockschaltern, einer Wickelfederkassette, einer Lenkwinkelsensoreinrichtung und dergleichen. Diese Funktionsmodule sind in unterschiedlichen Ebenen übereinander in axialer Richtung der Lenksäule, diese umgebend angeordnet. Am Mantelrohr der Lenksäule ist ferner ein Lenkradschloß befestigt. Ein Zündanlaßschalter kann als Funktionsmodul Teil eines Lenksäulenmoduls sein. Den Funktionsmodulen ist ferner ein Elektronikmodul zugeordnet, welches die einzelnen Funktionsmodule kontaktiert und über das die Funktionsmodule an das Bordnetz des Kraftfahrzeuges angeschlossen sind. Zusätzlich kann die Leistungselektronik der Funktionsmodule auf der Elektronikplatte angeordnet sein.
Zum erleichterten Montieren eines solchen Lenksäulenmoduls erfolgt eine elektrische Kontaktierung der einzelnen Funktionsmodule mit dem Elektronikmodul durch Einsatz von Steckverbindern, von denen jeweils ein Steckverbinderteil einem zu kontaktierenden Funktionsmodul und das damit zusammenwirkende, komplementär ausgebildete Steckverbinderteil dem Elektronikmodul zugeordnet ist. Das Elektronikmodul bildet bei einer vorbekannten Ausgestaltung, wie beispielsweise aus der EP 0 853 022 A1 bekannt, eine eigene Ebene in dem Aufbau des Lenksäulenmoduls und ist somit in den schichtigen Aufbau des Funktionsmouduls integriert. Bei dieser vorbekannten Ausgestaltung bildet das Elektronikmodul eine unterste Ebene, auf der in einer ersten darüberliegenden Funktionsmodulebene mehrere Lenkstockschalter angeordnet sind. Eine unmittelbare Kontaktierung zwischen den Schaltern und dem Elektronikmodul ist infolge der benachbarten Anordnung ohne weiteres möglich. In einer weiteren Ebene oberhalb der Ebene der Lenkstockschalter ist eine Wickelfederkassette angeordnet. Damit diese ebenfalls durch das Elektronikmodul kontaktiert werden kann, weist diese einen länglichen Fortsatz auf, der durch die Anordnung der Lenkstockschalter hindurch bis in die Ebene des Elektronikmoduls hindurchgreift, um in ein Steckverbinderteil des Elektronikmoduls eingeführt werden zu können.

Bei diesem vorbekannten Lenksäulenmodul können an dem Elektronikmodul zwar mehrere Funktionsmodule angeordnet in unterschiedlichen Ebenen elektrisch kontaktiert werden, jedoch bedarf es eines Durchgriffes der nicht unmittelbar an das Elektronikmodul grenzenden Funktionsmodule durch die anderen. Zu diesem Zweck müssen die Funktionsmodule - sowohl diejenigen, die an dem Elektronikmodul kontaktiert werden sollen als auch diejenigen, durch die die Kontaktierung geführt werden muß - speziell ausgebildet sein. Dieses zwingende aufeinander abgestimmt sein, erschwert die Bereitstellung von Lenksäulenmodulen, deren Funktionsmodule nach Art eines Baukastenprinzips zur Ausbildung einer den jeweiligen Bestimmungen entsprechenden Lenksäulenmoduls kombiniert werden können. Insbesondere beeinträchtigt das Durchgreifen der in nicht benachbarter Anordnung zum Elektrikmodul befindlichen Funktionsmodule durch andere den für die anderen Funktionsmodule zur Verfügung stehenden Raum in dieser Funktionsmodulebene. Sollen Funktionsmodule an dem Elektronikmodul angeschlossen werden, die zwei oder mehrere Funktionsmodulebenen durchgreifen müssen, ist dies nur mit einem unverhältnismäßig hohen Aufwand möglich.

Ausgehend von diesem diskutierten Stand der Technik liegt der Erfindung daher die Aufgabe zugrunde, ein eingangs genanntes gattungsgemäßes Lenksäulenmodul für Kraftfahrzeuge dergestalt weiterzubilden, daß die zum vorbekannten Stand der Technik aufgezeigten Nachteile vermieden sind.

Diese Aufgabe wird erfindungsgemäß dadurch gelöst, daß für die Kontaktierung durch das Elektronikmodul vorgesehene Steckverbinderteile der Funktionsmodule bzgl. ihrer Längserstreckung radial oder tangential zur Lenksäule angeordnet sind und das Elektronikmodul an den Funktionsmodulen mit den ihm zugeordneten Steckverbinderteilen außenseitig durch die Steckverbinderteile im Eingriff stehend angeordnet ist.

Bei dem erfindungsgemäßen Lenksäulenmodul ist im Gegensatz zum vorbekannten Stand der Technik das Elektronikmodul nicht Teil des schichtigen Aufbaus, sondern erstreckt sich quer zu der schichtigen Anordnung der Funktionsmodulebenen. Folglich können je nach Ausgestaltung des Elektronikmoduls quasi beliebig viele Funktionsmodule angeordnet in unterschiedlichen Ebenen bezogen auf die Längsachse der Lenksäule kontaktiert werden, ohne daß zu diesem Zweck die Funktionsmodule bezüglich ihrer Kontaktierung ineinander greifen müssen. In jeder Funktionsmodulebene ist für die zu kontaktierenden Funktionsmodule zumindest ein Steckverbindungsteil bezüglich seiner Längserstreckung radial oder tangential zur Längsachse der Lenksäule angeordnet. Die Steckverbinder befinden sich an der Außenseite der zu kontaktierenden Funktionsmodule, so daß durch Aufstecken bzw. Aufsetzen des Elektronikmoduls eine gleichzeitige Kontaktierung sämtlicher Funktionsmodule erfolgt. Die periphere Anordnung des Elektronikmoduls ist insbesondere auch im Hinblick auf eine Austauschbarkeit des Elektronikmoduls oder bei Reparaturzwekken von Vorteil, da der Aufbau der Funktionsmodule zueinander nicht auseinander genommen werden muß.

Zweckmäßigerweise ist das Elektronikmodul in einem Gehäuse aufgenommen, an dem Befestigungsmittel zum Befestigen des Gehäuses an den Funktionsmodulen möglich ist. Beispielsweise kann eine solche Befestigung durch Einsatz von clipsartig wirkenden Rastmitteln realisiert sein. Das Elektronikmodul bzw. sein Gehäuse kann somit eingesetzt werden, auch um eine Fixierung der Funktionsmodule in den unterschiedlichen Ebenen zueinander zu realisieren. Das Elektronikmodul benötigt keinen zusätzlichen Einbauraum in axialer Richtung bezogen auf die Längsachse der Lenksäule. Dieser Raum ist ohnehin sehr begrenzt, da in Lenksäulenmodulen zunehmend mehr Funktionsmodule integriert werden. Das außenseitig an den Funktionsmodulen anliegende Elektronikmodul kann beispielsweise mit seinem Gehäuse an der zum Boden eines Kraftfahrzeugs weisenden Seite eines Lenksäulenmoduls angeordnet sein.

In einer zweckmäßigen Ausgestaltung eines solchen Lenksäulenmoduls ist in dieses ebenfalls ein Schloßkörper eines Lenkradschlosses integriert, welches an dem Mantelrohr der Lenksäule befestigt ist. Dieser Schloßkörper selbst stellt zwar kein Funktionsmodul dar, jedoch dient dieser in dieser Ausgestaltung als Träger für die schichtig übereinander angeordneten Funktionsmodule. Durch diese Anordnung wird weiterer Bauraum in axialer Richtung eingespart, da beim vorbekannten Stand der Technik für die Befestigung der Funktionsmodule eigene Träger, individuell am Mantelrohr befestigt eingesetzt sind.

In einer weiteren Ausgestaltung ist vorgesehen, daß das Elektronikmodul Fortsätze aufweist, die aus der eigentlichen parallel zur Lenksäule angeordneten Montageebene in die Ebene der Funktionsmodule abklappbar sind. Durch solche Fortsätze können beispielsweise das oberste und unterste Funktionsmodul umgriffen werden, so daß bei diesen auch eine Kontaktierung in axialer Richtung möglich ist. Das Elektronikmodul selbst kann beispielsweise in einem solchen Fall als flexible, zum Teil ausgesteifte Leiterplatte ausgebildet sein, so daß der Anschluß zusätzlicher Leiterbahnen nicht notwendig ist.

Weitere Vorteile und Ausgestaltungen der Erfindung sind Bestandteil der übrigen Unteransprüche sowie der nachfolgenden Beschreibung eines Ausführungsbeispieles unter Bezugnahme auf die beigefügten Figuren. Es zeigen:
- **Fig. 1:**: Eine schematisierte Seitenansicht eines auf dem Mantelrohr einer Lenksäule montierten Lenksäulenmoduls und
- **Fig. 2:**: Eine Explosionsdarstellung eines Lenksäulenmoduls gemäß der Erfindung und
- **Fig. 3:**: Eine Draufsicht auf das montierte Lenksäulenmodul der Figur 2.

Ein Lenksäulenmodul 1 ist an dem Mantelrohr 2 einer Lenksäule 3 befestigt. Auf dem freien Ende der Lenkspindel 4 ist ein Lenkrad 5 angeordnet.

Das Lenksäulenmodul 1 besteht aus mehreren Funktionsmodulen F₁ - F₄, die in vier parallel zueinander angeordneten Ebenen E₁ - E₄ quasi geschichtet übereinanderliegend angeordnet sind. Dabei kann vorgesehen sein, daß in einer Funktionsmodulebene mehrere einzelne Funktionsmodule angeordnet sind. Die Funktionsmodulebenen E₁ - E₄ sind quer zur Längserstreckung der Lenksäule 3 verlaufend vorgesehen. An der Außenseite der Funktionsmodule F₁ - F₄ angrenzend ist ein Elektronikmodul 6 angeordnet, das über Verklammerungsfüße 7, 8 an dem Funktionsmodulstapel befestigt ist. Das Elektronikmodul 6 besteht aus einem Gehäuse 6' und einer darin enthaltenen, nicht näher dargestellten Elektronik, die zum Kontaktieren der einzelnen Funktionsmodule F₁ - F₄ mit dem Bordnetz und zum Aufnehmen der Leistungselektronik der einzelnen Funktionsmodule F₁ - F₄ dient. Das Elektronikmodul 6 weist einen Anschluß 9 auf, über den dieses mit dem Bordnetz des Kraftfahrzeuges verbindbar ist.

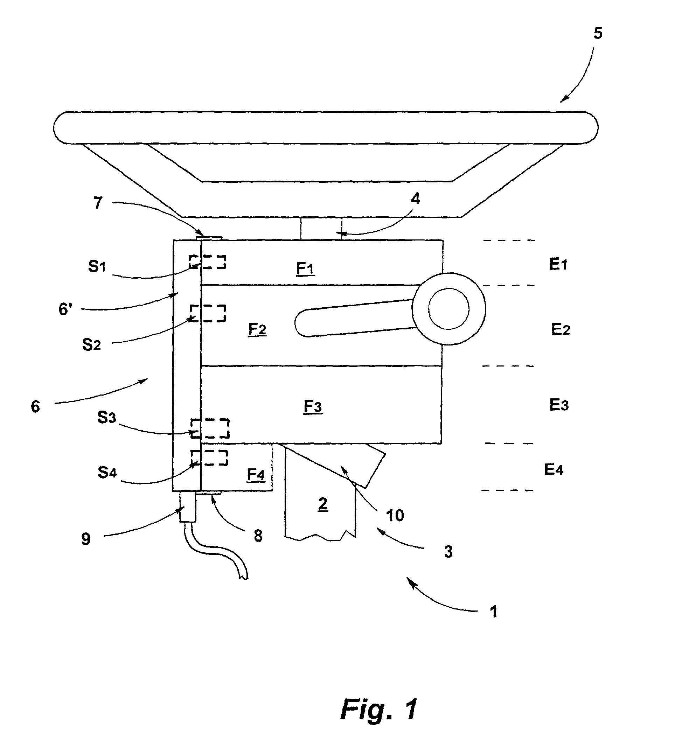

Eine elektronische Kontaktierung der einzelnen Funktionsmodule F₁ - F₄ durch das Elektronikmodul erfolgt über Steckverbinder S₁ - S₄, die in Figur 1 schematisiert gestrichelt dargestellt sind. Die Steckverbinder S₁ - S₄ bestehen jeweils aus zwei Steckverbinderteilen, von denen eines einem Funktionsmodul F₁ - F₄ und das weitere, komplementär ausgebildete dem Elektronikmodul 6 zugeordnet ist. Durch Aufstecken des Elektronikmoduls 6 aus radialer bzw. tangentialer Richtung zur Längsachse der Lenksäule 3 erfolgt die Kontaktierung der einzelnen Funktionsmodule F₁ - F₄. Durch das Umgreifen des Funktionsmodulstapels durch die Verklammerungsfüße 7, 8 erfolgt zusätzlich eine Fixierung der in den einzelnen Ebenen E₁ - E₄ enthaltenen Funktionsmodule F₁ - F₄ in axialer Richtung.

Das Lenksäulenmodul 1 ist bei dem dargestellten Ausführungsbeispiel über den Schloßkörper 10 eines Lenkradschlosses an dem Mantelrohr 2 befestigt. Bei dem Funktionsmodul F₄ handelt es sich um einen Zündanlaßschalter, bei dessen Betätigung auch eine Lenkradentriegelung erfolgen kann.

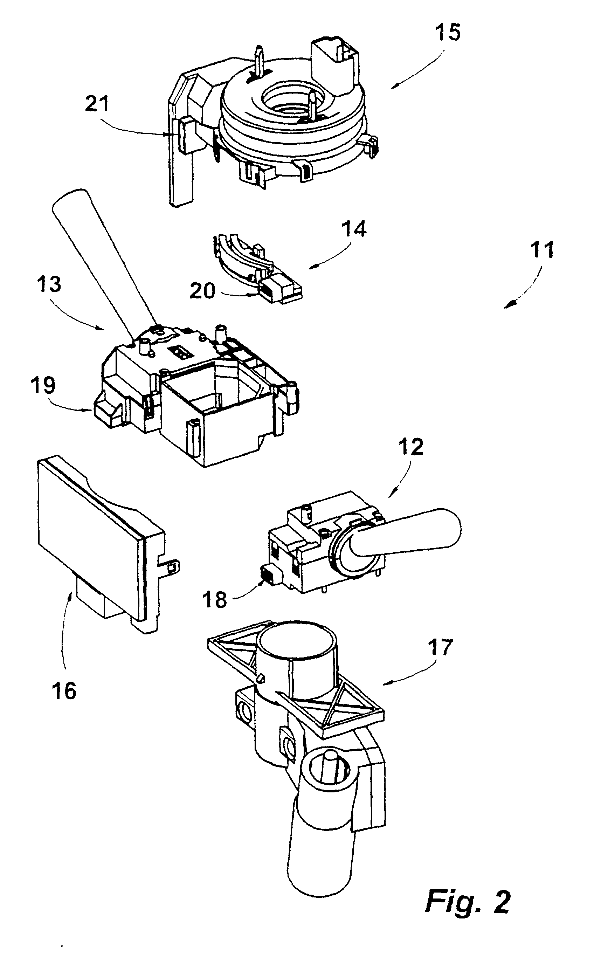

Figur 2 zeigt ein weiteres Lenksäulenmodul 11, bei dem als Funktionsmodule zwei Lenkstockschalter 12, 13, eine Lenkwinkelsensoreinrichtung 14 und eine Wickelfederkassette 15 in drei Ebenen übereinander befindlich angeordnet sind. Die Lenkstockschalter 12, 13 definieren eine Funktionsmodulebene. Dem Lenksäulenmodul 11 zugehörig ist ferner ein Elektronikmodul 16 sowie der Schloßkörper 17 eines Lenkradschlosses, mit dem das Lenksäulenmodul 11 am Mantelrohr der Lenksäule befestigbar ist. Jedes Funktionsmodul 12 - 15 weist ein radial bzw. tangential zur Achse der Lenksäule abgehendes Steckverbinderteil 18 - 21 auf, die nach einem Zusammenbau des Lenksäulenmoduls 11 durch das Elektronikmodul 16 kontaktiert sind. Das Elektronikmodul 16 trägt an entsprechender Stelle die komplementär zu den Steckverbinderteilen 18 - 21 ausgebildeten Steckverbinderteile.

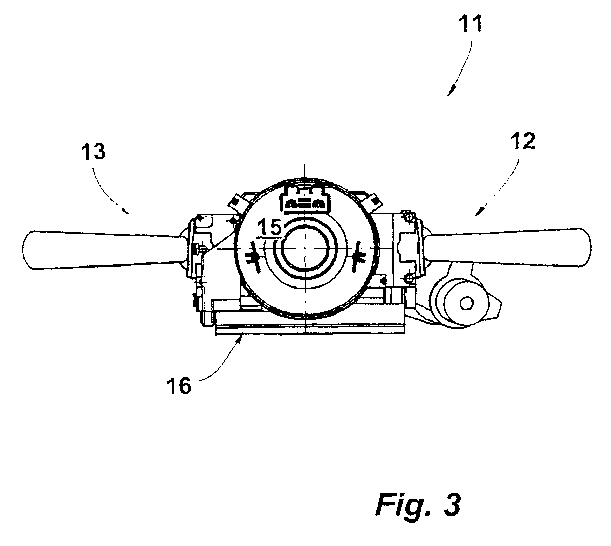

Der raumsparende Anbau des Elektronikmoduls 16 ist aus der Draufsicht des Lenksäulenmoduls 11 der Figur 3 erkennbar, die das Lenkäulenmodul 11 nach einem Zusammenbau aus lenkradseitiger Blickrichtung zeigt.

Aus der Beschreibung der Erfindung werden die Vorteile des beanspruchten Lenksäulenmoduls deutlich, insbesondere im Hinblick auf die Möglichkeiten eines modularen Aufbaus, ohne daß durchgreifende Kontaktorgane berücksichtigt werden müssen. Femer kann das Elekrronikmodul entsprechend der gewünschten Anzahl und Ausbildung der Funktionsmodule bereitgestellt sein. Dabei kann vorgesehen sein, das Gehäuse des Elektronikmoduls gleichbleibend auszugestalten, während sein Inneres - die Elektronik sowie die Steckverbinderteile den jeweilig gewünschten Verhältnissen angepaßt ist. Auch die Montage und Demontage eines solchen Lenksäulenmoduls ist gegenüber einer Montage vorbekannter Funktionsmodule zur Ausbildung eines Lenksäulenmoduls vereinfacht.

### Zusammenstellung der Bezugszeichen

- 1: Lenksäulenmodul
- 2: Mantelrohr
- 3: Lenksäule
- 4: Lenkspindel
- 5: Lenkrad
- 6: Elektronikmodul
- 6': Gehäuse
- 7: Verklammerungsfuß
- 8: Verklammerungsfuß
- 9: Anschluß
- 10: Schloßkörper
- 11: Lenksäulenmodul
- 12: Lenkstockschalter
- 13: Lenkstockschalter
- 14: Lenkwinkelsensoreinrichtung
- 15: Wickelfederkassette
- 16: Elektronikmodul
- 17: Schloßkörper
- 18: Steckverbinderteil
- 19: Steckverbinderteil
- 20: Steckverbinderteil
- 21: Steckverbinderteil

- E₁ - E₄: Funktionsmodulebene
- F₁ - F₄: Funktionsmodul
- S₁ - S₄: Steckverbinder

## Patentansprüche

1. Lenksäulenmodul für ein Kraftfahrzeug enthaltend zumindest zwei in axialer Richtung der Lenksäule (3) benachbart zueinander angeordnete Funktionsmodule (F₁ - F₄; 12 - 15) sowie ein Elektronikmodul (6, 16) zum Kontaktieren der in den unterschiedlichen Ebenen (E₁ - E₄) angeordneten Funktionsmodule (F₁ - F₄; 12 - 15) mittels Steckverbindern (S₁ - S₄) sowie zum Anschließen derselben an das Bordnetz, wobei das jeweils eine Steckverbinderteil (18 - 21) eines Steckverbinders (S₁ - S₄) einem Funktionsmodul (F₁ - F₄; 12 - 15) und das damit zusammenwirkende dem Elektronikmodul (6, 16) zugeordnet sind, **dadurch gekennzeichnet, daß** für die Kontaktierung durch das Elektronikmodul (6, 16) vorgesehene Steckverbinderteile (18 - 21) der Funktionsmodule (F₁ - F₄; 12 - 15) bzgl. ihrer Längserstreckung radial oder tangential zur Lenksäule (2) angeordnet sind und das Elektronikmodul (6, 16) an den Funktionsmodulen (F₁ - F_{4,} 12 - 15) mit den ihm zugeordneten Steckverbinderteilen außenseitig durch diese Steckverbinderteile im Eingriff stehend angeordnet ist.

2. Lenksäulenmodul nach Anspruch 1, **dadurch gekennzeichnet, daß** das Elektronikmodul (6, 16) ein Gehäuse (6') aufweist, an dem Befestigungsmittel (7, 8) zum Befestigen des Gehäuses (6') an einem oder mehreren Funktionsmodulen (F₁ - F₄) angeordnet sind.

3. Lenksäulenmodul nach Anspruch 2, **dadurch gekennzeichnet, daß** die Befestigungsmittel endseitig einen Verklammerungswulst tragende Verklammerungsfüße (7, 8) sind, die im montierten Zustand des Elektronikmoduls (6, 16) einen an einen Funktionsmodul (12, 13) angeordneten Hinterschnitt hintergreifen.

4. Lenksäulenmodul nach einem der Ansprüche 1 bis 3, **dadurch gekennzeichnet, daß** das Elektronikmodul (6) abklappbare Fortsätze aufweist, die in axialer Richtung an der Oberseite bzw. der Unterseite eines obersten bzw. eines untersten Funktionsmoduls anliegen.

5. Lenksäulenmodul nach einem der Ansprüche 1 bis 4, **dadurch gekennzeichnet, daß** das Elektronikmodul ein Anschlußsteckverbinderteil (9) aufweist, das bzgl. seiner Längserstreckung in axialer Richtung verlaufend und mit seiner zu kontaktierenden Seite von einem Lenkrad (5) wegweisend angeordnet ist.

6. Lenksäulenmodul nach einem der Ansprüche 1 bis 5, **dadurch gekennzeichnet, daß** die Funktionsmodule (F₁ -F₄; 12 - 15) über ein am Mantelrohr (3) der Lenksäule (2) befestigten Schloßkörper (10, 17) eines Lenkradschlosses an der Lenksäule (2) befestigt sind.

## Claims

1. Steering column module for a vehicle, comprising at least two function modules (F₁ - F₄; 12 - 15) arranged adjacent to each other in the axial direction of the steering column (3) and an electronic module (6, 16) for contacting the function modules (F₁ - F₄; 12 -15) provided at the various levels (E₁ - E₄) by means of connectors (S₁ - S₄) as well as for linking the same to the vehicle electrical system, with the one connector element (18 - 21) of each connector (S₁ - S₄) assigned to a function module (F₁ - F₄; 12 - 15) and the other connector element cooperating with the same assigned to the electronic module (6, 16), **characterized by the fact** that for contacting, connectors (18 - 21) of the function modules (F₁ - F₄; 12 - 15) are provided through the electronic module (6, 16) and arranged with their longitudinal span radially or at a tangent to the steering column (2) and the electronic module (6, 16) is arranged on the function modules (F₁ - F₄; 12 - 15) with the connector elements assigned to it engaging on the outside by means of these connector elements.

2. Steering column module in accordance with Claim 1, **characterized by the fact** that the electronic module (6, 16) features a housing (6') on which fastening means (7, 8) are provided for attaching the housing (6') to one or more function modules (F₁ - F₄).

3. Steering wheel module in accordance with Claim 2, **characterized by** the fact that the fastening means constitute a clasping bead on the end side borne by clasping feet (7, 8) which grip behind an undercut provided on one function module (12, 13) when the electronic module (6, 16) is in its assembled state.

4. Steering column module in accordance with any of Claims 1 to 3, **characterized by** the fact that the electronic module (6) features swing-down extensions which come to lie on the top surface resp. the bottom surface of the uppermost, resp. of the lowest function module in the axial direction.

5. Steering column module in accordance with any of Claims 1 to 4, **characterized by** the fact that the electronic module features a terminal connection (9) which is arranged to extend in the axial direction with respect to its longitudinal span and to face away from a steering wheel (5) with its side to be contacted.

6. Steering wheel module in accordance with any of Claims 1 to 5, **characterized by the fact** that the function modules (F₁ - F₄; 12 - 15) are fastened to the steering column (2) by means of a lock element (10, 17) of a steering wheel lock attached to the tube (3) of the steering column (2).

## Revendications

1. Module de colonne de direction pour un véhicule automobile comprenant au moins deux modules fonctionnels (F₁ à F₄; 12 à 15), disposés à proximité l'un de l'autre, dans le sens axial de la colonne de direction (3), ainsi qu'un module électronique (6, 16) pour la connexion, à l'aide de connecteurs à fiches (S₁ à S₄), des modules fonctionnels, disposés à des niveaux différents (E₁ à E₄), ainsi que pour le raccordement de ceux-ci au réseau de bord, l'un des éléments (18 à 21) d'un connecteur à fiches (S₁ à S₄) étant affecté à un module fonctionnel (F₁ à F₄; 12 à 15) et l'autre élément complémentaire étant affecté au module électronique (6, 16), **caractérisé en ce que,** des éléments de connecteurs à fiches (18 à 21) de modules fonctionnels (F₁ à F₄; 12 à 15) resp. de leur prolongement allongé, prévus pour l'établissement du contact avec le module électronique (6, 16), sont disposés dans le sens radial ou tangentiel par rapport à la colonne de direction (2), et que le module électronique (6, 16) est connecté, du côté extérieur, avec les modules fonctionnels (F₁ à F₄, 12 à 15), par l'intermédiaire de ces éléments de connecteurs à fiches, à l'aide des éléments de connecteur à fiches qui lui sont affectés.

2. Module de colonne de direction selon la revendication 1, **caractérisé en ce que** le module électronique (6, 16) présente un boîtier (6') sur lequel des moyens de fixation (7, 8) sont disposés pour fixer le boîtier (6') à un ou à plusieurs module(s) fonctionnel(s) (F₁ à F4).

3. Module de colonne de direction selon la revendication 2, **caractérisé en ce que** les moyens de fixation forment, à l'extrémité, des pieds d'agrafage (7, 8) présentant un bourrelet de retenue, qui, lorsque le module électronique (6, 16) est monté, agrippent une contre-dépouille prévue sur un module fonctionnel (12. 13).

4. Module de colonne de direction selon l'une quelconque des revendications 1 à 3, **caractérisé en ce que** le module électronique (6) présente des prolongements qui, dans le sens axial, portent contre la surface d'un module supérieur resp. d'un module inférieur.

5. Module de colonne de direction selon l'une quelconque des revendications 1 à 3, **caractérisé en ce que** le module électronique présente un élément de connecteur à fiches (9) qui est disposé, quant à sa longueur, dans le sens axial et est orienté avec son côté de contact à l'opposé d'un volant (5).

6. Module de colonne de direction selon l'une quelconque des revendications 1 à 3, **caractérisé en ce que** les modules fonctionnels (F1 à F4 ; 12 à 15) sont fixés à la colonne de direction (2) par l'intermédiaire d'un corps de serrure (10, 17) d'un verrouillage de volant fixé au tube enjoliveur (3) de la colonne de direction (2).
